Europäisches Patentamt

European Patent Office

Office européen des brevets

(11) Veröffentlichungsnummer: **0 090 306**
**B1**

(12) **EUROPÄISCHE PATENTSCHRIFT**

(45) Veröffentlichungstag der Patentschrift:
04.09.85

(51) Int. Cl.⁴: **B 01 J 20/32**

(21) Anmeldenummer: 83102765.1

(22) Anmeldetag: 21.03.83

(54) Verfahren zum Verfestigen der Oberflächen von körnigen Adsorbentien.

(30) Priorität: 30.03.82 DE 3211629

(43) Veröffentlichungstag der Anmeldung:
05.10.83 Patentblatt 83/40

(45) Bekanntmachung des Hinweises auf die Patenterteilung:
04.09.85 Patentblatt 85/36

(84) Benannte Vertragsstaaten:
BE DE FR GB IT NL

(73) Patentinhaber: BASF Aktiengesellschaft,
Carl-Bosch-Strasse 38, D-6700 Ludwigshafen (DE)

(72) Erfinder: Haas, Franz, Dr., Mohnstrasse 17,
D-6700 Ludwigshafen (DE)
Erfinder: Janisch, Gerhard, Dr., Osloer Weg 44,
D-6700 Ludwigshafen (DE)
Erfinder: Schreyer, Gerold, Ungsteiner Strasse 6,
D-6700 Ludwigshafen (DE)

(56) Entgegenhaltungen:
DE - A - 2 735 179
DE - A - 2 946 645
FR - A - 2 239 282
FR - A - 2 283 101

CHEMICAL ABSTRACTS, Band 82, 1975, Seite 119, Nr. 75025p, Columbus, Ohio, USA

ACTORUM AG

## Beschreibung

Adsorbentien, wie z.B. Aktivkohlen, die meist in körniger Form bei technischen Adsoptionsverfahren eingesetzt werden, neigen in der Regel dazu, zu stauben, insbesondere bei mechanischer Beanspruchung, wie sie beispielsweise schon beim Einfüllen in Adsorptionseinrichtungen oder vor allem beim Einsatz in einer bewegten Schicht auftreten. Der bei einer derartigen mechanischen Beanspruchung auftretende Abrieb kann bei weiteren Verfahrensschritten stark stören. Insbesondere kann ein derartiger Abrieb den Einsatz vieler körniger Adsorbentien in der bewegten Schicht praktisch unmöglich machen.

Der vorliegenden Erfindung liegt daher die Aufgabe zugrunde, die Oberfläche körniger Adsorbentien derart zu verfestigen, dass ein Abrieb, der bei mechanischer Beanspruchung, insbesondere in einer bewegten Schicht, eintritt, zumindest stark vermindert wird bzw. weitgehend verhindert wird.

Die Aufgabe wird erfindungsgemäss dadurch gelöst, dass man die Adsorbentien, die zunächst praktisch kein Wasser enthalten,

1) mit 25 bis 70 Gew.-% der maximal möglichen Menge an Wasser behandelt, das sie bis zur Sättigung aufnehmen können,

2) die Adsorbentien auf eine Temperatur erhitzt, bei der das aufgenommene Wasser verdampft,

3) und sie, solange aufgenommenes Wasser verdampft, unter Mischen mit wässerigen Dispersionen von selbstvernetzenden N-Methylol- und/oder N-Methylolethergruppen aufweisenden Copolymerisaten behandelt, so dass das Gewichtsverhältnis von Copolymerisat, das auf den Adsorbentien haftet, zu Adsorbentien 2:98 bis 30:70 beträgt und

4) die so beschichteten Adsorbentien auf Temperaturen von 110 bis 180°C erhitzt, um die Copolymerisate zu vernetzen.

Körnige Adsorbentien, die technisch von Bedeutung sind und deren Oberflächen erfindungsgemäss verfestigt werden können, sind beispielsweise kohlenstoffhaltige Adsorbentien, wie Aktivkohle, Aktivkoks und Kohlenstoffmolekularsiebe, Aktivtonerden, die z.B. durch Entwässern und Kalzinieren von Aluminiumhydroxyd erhalten werden, Kieselgele und Molekularsiebzeolithe, die sich von natürlichen und synthetischen, hydratisierten Alumosilikaten ein- oder mehrwertiger Basen ableiten. Von den körnigen Adsorbentien werden vorzugsweise Aktivkohlen verwendet. Die innere Oberfläche der Aktivkohle liegt im allgemeinen zwischen 400 und 1600 m²/g, während die innere Oberfläche der übrigen Adsorbentien in dem Bereich von 100 bis 1000 m²/g beträgt.

Der mittlere Teilchendurchmesser der körnigen Adsorbentien beträgt 0,3 bis 9, vorzugsweise 2 bis 5 mm.

Die körnigen Adsorbentien werden nach einem speziellen Verfahren beschichtet, bei dem sich auf den Oberflächen der Adsorbentien durchlässige Filme bzw. netzartige Strukturen ausbilden. Für die Verfestigung der Oberflächen von körnigen Adsorbentien werden wässerige Dispersionen von selbstvernetzenden Copolymerisaten verwendet, die als wesentliches Kennzeichen N-Methylol- und/oder N-Methylolethergruppen einpolymerisiert enthalten. Die Copolymerisate enthalten die im folgenden genannten Monomeren oder deren Mischungen als Hauptbestandteile in copolymerisierter Form:

Styrol, Acrylnitril, Vinylchlorid, Vinylidenchlorid, Vinylester von $C_1$- bis $C_4$- gesättigten Carbonsäuren, Acrylsäure- und Methacrylsäureester von einwertigen $C_1$- bis $C_{12}$-Alkoholen, Methacrylnitril und Butadien-1,3, Mischungen aus Styrol und Butadien, Styrol und Acrylnitril, Styrol und Methacrylnitril, Butadien und (Meth)acrylnitril, Styrol und (Meth)acrylsäureester, Vinylacetat und (Meth)acrylester sowie Styrol, Acrylsäureester und Acrylnitril. Diese Gruppe von Monomeren ist zu etwa 90 bis 99,5 Gew.-% am Aufbau der Copolymerisate beteiligt. Die Copolymerisate enthalten als kennzeichnende Gruppierungen N-Methylolamide von $\alpha,\beta$-monoolefinisch ungesättigten, 3 bis 5 C-Atome enthaltenden Mono- und/oder Dicarbonsäuren, insbesondere N-Methylolacrylamid, N-Methylolmethacrylamid und N-Methylolfumarsäurediamid sowie die entsprechenden Ether, wie N-$C_1$ bis $C_4$-Alkoxymethylamide monoolefinisch ungesättigter Mono- und Dicarbonsäuren mit 3 bis 5 C-Atomen, z.B. N-Ethoxymethylmethacrylamid, N-n-Butoxyethylacrylamid und N-Isopropoxymethylmethacrylamid. Die Menge derartiger vernetzend wirkender Monomeren liegt im allgemeinen zwischen 0,5 und 10, vorzugsweise zwischen 1 und 6 Gew.-%, bezogen auf die Copolymerisate.

Die Copolymerisate können zusätzlich noch in Mengen von 0 bis 5 Gew.-% monoolefinisch ungesättigte Carbonsäuren mit 3 bis 5 C-Atomen oder die entsprechenden Säureamide einpolymerisiert enthalten, z.B. Acrylsäure, Methacrylsäure, Fumarsäure, Itaconsäure, Acrylnitril und Methacrylnitril.

Die Copolymerisate werden nach bekannten Verfahren in Form von etwa 40 bis 55 gew.-%igen wässerigen Dispersionen hergestellt, die aufgrund des Herstellungsverfahrens übliche Hilfsstoffe, wie anionische oder nichtionische Emulgatoren enthalten. Solche selbstvernetzenden Polymerisatdispersionen sind im Handel erhältlich.

Vorzugsweise verwendet man wärmesensibel eingestellte Dispersionen von selbstvernetzenden Copolymeren, die durch Copolymerisieren von Monomermischungen auf der Basis von Butylacrylat/Styrol/Acrylnitril, Butadien/Styrol/Acrylsäure, Butadien/Acrylnitril oder Vinylacetat/n-Butylacrylat mit N-Methylolmethacrylamid hergestellt werden. Bei den Wärmesensibilisierungsmitteln handelt es sich beispielsweise um alkoxylierte Amine mit inverser Löslichkeit in Wasser, deren Verwendung zum Wärmesensibilisieren von Dispersionen aus der GB-PS 1422873 bekannt ist. Ausser den alkoxylierten Aminen mit inverser Löslichkeit in Wasser können eine Reihe anderer Sensibilisierungsmittel verwendet werden, z.B. wasserlösliche Polyacetale, oxalkylierte Polysiloxane und kationenaktive Stoffe. Spezielle Sensibilisierungsmittel auf Basis alkoxylierter Amine sind beispielsweise aus der GB-PS 1422873 bekannt. Eine Wärmesensibilisierung der anionischen oder nichtionischen Polymerdispersionen selbstvernetzender Polymerisate erreicht man durch Zusatz von etwa 0,5 bis 30 Gew.-% eines Sensibilisierungsmittels zur Dispersion. Vorzugsweise betragen die Mengen an Sensibilisierungsmittel 1 bis 10 Gew.-%, bezogen auf die Polymerdispersion.

Um auf den Adsorbentien einen porösen Überzug herzustellen, belädt man die Adsorbentien zunächst in einem ersten Verfahrensschritt mit 25 bis 70, vorzugsweise 30 bis 60 Gew.-% der maximal möglichen Menge an Wasser, das sie bis zur Sättigung aufnehmen können. Diese Menge ist für die einzelnen körnigen Adsorbentien unterschiedlich. Aktivkohle kann in der Regel pro Gewichtsteil ein Gewichtsteil Wasser aufnehmen. Um die körnigen Adsorbentien mit Wasser zu beladen, verfährt man vorzugsweise so, dass man Wasser auf die Oberfläche einer Schüttung der Adsorbentien sprüht. Die Schüttung wird dabei gemischt, dass nach Möglichkeit eine gleichmässige Beladung der Adsorbentien mit Wasser eintritt. Eine andere Möglichkeit besteht auch darin, Dampf auf eine Schüttung von Adsorbentien unter Mischen der Adsorbentien zu blasen. Ebenso ist es selbstverständlich möglich, bereits wasserhaltige Adsorbentien zu verwenden, die die geforderte Gewichtsmenge an Wasser enthalten.

In einem zweiten Verfahrensschritt werden die Adsorbentien auf eine Temperatur erhitzt, bei der das aufgenommene Wasser verdampft und dabei die Poren bzw. Kanäle an den Oberflächen den Adsorbentien offenhält. Sofern man bei Normaldruck arbeitet, ist es erforderlich, die Adsorbentien auf mindestens 100°C zu erhitzen. Es ist jedoch auch möglich, das Wasser unter vermindertem Druck bei einer tieferen Temperatur, z.B. bis herab zu etwa 40°C, aus den Adsorbentien zu verdampfen.

In einem dritten Verfahrensschritt werden die Adsorbentien dann mit wässerigen Dispersionen der selbstvernetzenden Copolymerisate behandelt. Wichtig ist dabei, dass während der Einwirkung der wässerigen Dispersionen aus den körnigen Adsorbentien das aufgenommene Wasser verdampft. Die Verfahrensschritte (2) und (3) laufen somit praktisch gleichzeitig ab. Die körnigen Adsorbentien werden während der Behandlung mit den Copolymerisatdispersionen gemischt, so dass sie nach Möglichkeit gleichmässig mit Polymerteilchen aus der Dispersion bedeckt werden. Die Dispersionen werden vorzugsweise auf die körnigen Adsorbentien gesprüht. Auf die Oberfläche der Adsorbentien wird so viel Copolymerisat aufgebracht, dass das Gewichtsverhältnis von Copolymerisat : Adsorbentien 2:98 bis 3:70 beträgt. Vorzugsweise beträgt dieses Verhältnis 4:96 bis 10:90.

In einem vierten Verfahrensschritt werden die mit Dispersionen behandelten Adsorbentien auf eine Temperatur in dem Bereich von 110 bis 180, vorzugsweise 120 bis 160°C erhitzt, um die Copolymerisate zu vernetzen. Die ursprünglich thermoplastischen Coplymerisate werden dadurch unschmelzbar und sind in organischen Lösungsmitteln, wie z.B. Toluol, Xylol oder Chlorkohlenwasserstoffen nicht mehr löslich.

Die auf den körnigen Adsorbentien niedergeschlagenen Dispersionsteilchen sind fest auf den Adsorbentien verankert und verfestigen die Oberfläche der Adsorbentien. Sie bilden darauf einen durchlässigen Überzug, so dass die Adsorbtions- und Desorptionsfähigkeit der Adsorbentien praktisch nicht beeinträchtigt wird. Dagegen wird der Abriebverlust, den die unbeschichteten Adsorbentien aufweisen, stark vermindert, so dass die erfindungsgemäss hergestellten körnigen Adsorbentien in bewegten Betten für die Adsorption eingesetzt werden können.

Die Verfahrensschritte (1), (2) und (3) können mehrmals wiederholt werden, so dass die erforderliche Auftragsmenge an Copolymerisat auf die Adsorbentien erreicht wird. Eine obere Grenze von 30 Teilen Copolymerisat pro 70 Teile Adsorbens sollte dabei jedoch nicht überschritten werden, weil sich sonst die Adsorptions- und Desorptionseigenschaften der Stoffe verschlechtern.

Die in den folgenden Beispielen angegebenen Teile und Prozente beziehen sich auf das Gewicht.

Folgende Polymerdispersionen wurden verwendet:

*Dispersion 1:*

40%ige wässerige Dispersion eines Copolymerisates aus 53% n-Butylacrylat, 28% Styrol, 13% Acrylnitril, 4% N-Methylolmethacrylamid und 1% Acrylsäure.

*Dispersion 2:*

50%ige Dispersion eines Copolymerisates aus 50% Butadien, 40% Styrol, 5% Acrylsäure und 5% N-Methylolmethacrylamid.

*Dispersion 3:*

45%ige wässerige Dispersion eines Copolymerisates aus 65% Butadien, 30% Acrylnitril und 5% N-Methylolacrylamid.

*Dispersion 4:*

50%ige wässerige Dispersion eines Copolymerisates aus 80% Vinylacetat, 17% n-Butylacrylat und 3% N-Methylolmethacrylamid.

*Dispersion 5:*

Mischung aus 95 Teilen Dispersion 3 und 5 Teilen eines Wärmesensibilisierungsmittels auf Basis eines mit 48 Mol Propylenoxid und 20 Mol Ethylenoxid je Mol Ethylendiamin erhaltenen Additionsprodukts mit inverser Löslichkeit in Wasser (wärmesensibel eingestellte Dispersion).

*Dispersion 6:*

Mischung aus 120 Teilen Dispersion 1 und 5 Teilen eines handelsüblichen Wärmesensibilisierungsmittels auf Basis eines quaternierten Polyadditionsprodukts von 20 Mol Propylenoxid und 5 Mol Ethylenoxid an 1 Mol Ethylendiamin (wärmesensibel eingestellte Dispersion).

*Beispiel 1:*

500 Gew.-Teile einer praktisch trockenen Aktivkohle, die einen mittleren Teilchendurchmesser von 4 mm und eine innere Oberfläche von 1300 m²/g hatte, werden in einem offenen Gefäss
1) mit 200 Teilen Wasser gleichmässig besprüht und während dieses Vorgangs gewendet. Die Aktivkohle enthielt 60% Wasser der maximal möglichen Aufnahmemenge.

Sie wurde dann
2) auf eine Temperatur von 103°C erhitzt, wobei Wasserdampf entwich und die Poren bzw. Kanäle an den Oberflächen der Adsorbentien offenhielt, und
3) mit 100 Teilen der Dispersion 1 besprüht.

Es wurde darauf geachtet, dass während des Besprühens mit der Dispersion 1 Wasserdampf aus der körnigen Aktivkohle entwich. Um einen gleichmässigen Copolymerisatauftrag auf der Aktivkohle zu erreichen, wurde sie mehrfach gewendet. Die Verfahrensschritte (1), (2) und (3) wurden insgesamt dreimal wiederholt. Dann wurde die mit Polymerisat beladene Aktivkohle auf eine Temperatur von 130°C erhitzt, um die Polymerisatteilchen darauf zu vernetzen. Die Vernetzungsdauer betrug insgesamt 3 Minuten. Die Aktivkohle war danach mit einem porösen Kunststoffüberzug versehen. Das Verhältnis von Copolymerisat zu Aktivkohle betrug 10:90. Nach dem Vernetzungsvorgang war die Oberfläche der körnigen Aktivkohle verfestigt.

*Beispiel 2:*

500 Gew.-Teile einer praktisch trockenen Aktivkohle, die einen mittleren Teilchendurchmesser von 4 mm und eine innere Oberfläche von 900 m²/g hatte, wurden bei Raumtemperatur gleichmässig (1) mit 150 Teilen Wasser besprüht. Die Aktivkohle hatte 40% der maximal möglichen Menge an Wasser aufgenommen. Sie wurde dann in einem zweiten Verfahrensschritt auf eine Temperatur von 150°C erhitzt, um das Wasser daraus abzudampfen, und in einem dritten Verfahrensschritt mit 100 Teilen der Dispersion 2 und 15 Teilen Wasser besprüht. Um einen gleichmässigen Polymerauftrag zu bekommen, wurde das körnige Material mehrfach gewendet. Die Verfahrensschritte 1 bis 3, d.h. Behandeln der Aktivkohle mit Wasser, Erhitzen auf Temperaturen oberhalb 100° und Auftragen der Polymerdispersion, wurden insgesamt dreimal wiederholt. Danach betrug das Gewichtsverhältnis Polymer: Aktivkohle 7:93.

Das in dieser Weise beschichtete Material wurde anschliessend auf eine Temperatur von 130°C erhitzt, um das Copolymerisat zu vernetzen. Man erhielt dabei eine körnige Aktivkohle, deren Oberfläche mit einem Polymerisat verfestigt war.

*Beispiel 3:*

In einem offenen Gefäss wurden 500 Gew.-Teile Aktivkohle, die einen mittleren Teilchendurchmesser von 4 mm und eine innere Oberfläche von 1500 m²/g hatte, gleichmässig mit 180 Teilen Wasser besprüht, wobei man die Aktivkohle sorgfältig wendete. Sie nahm dabei 50 Gew.-% der maximal möglichen Menge an Wasser auf, die sie bis zur Sättigung aufnehmen kann. Danach erhitzte man die mit Wasser beladene Aktivkohle auf eine Temperatur von 105°C und besprühte sie, nachdem Wasserdampf aus der Aktivkohle austrat, mit 100 Teilen der Dispersion 3 und 25 Teilen Wasser. Die Verfahrensschritte (1) Beladen der Aktivkohle mit Wasser, (2) Erhitzen auf 105°C und (3) gleichzeitiges Behandeln mit Dispersion 3 und 20 Teilen Wasser wurden dreimal wiederholt. Man erhielt danach eine mit einem Coplymerisat beschichtete Aktivkohle, bei dem das Verhältnis von Polymerisat: Aktivkohle 5:95 betrug. Die so beschichtete körnige Aktivkohle wurde zur Vernetzung des Copolymerisates auf eine Temperatur von 150°C erhitzt. Die Vernetzung war nach 4 Minuten beendet. Danach lag eine mit einem porösen Überzug versehene körnige Aktivkohle vor, deren Oberfläche verfestigt war.

*Beispiel 4:*

500 Gew.-Teile einer Aktivkohle, die einen mittleren Teilchendurchmesser von 4 mm und eine innere Oberfläche von 1500 m²/g hatte, wurde in einem offenen Gefäss mit 200 Gew.-Teilen Wasser besprüht, wobei man durch Wenden der Aktivkohle für eine möglichst gleichmässige Verteilung des Wassers sorgte. Die Aktivkohle hatte 60% Wasser ihres Sättigungswertes an Wasser aufgenommen. Danach wurde sie auf eine Temperatur von 150°C erhitzt und mit 100 Teilen der Dispersion 4 und 25 Teilen Wasser besprüht, nachdem Wasserdampf aus der Aktivkohle austrat. Während des Besprühens mit der Dispersion wurde die Aktivkohle mehrmals gewendet, so dass eine möglichst gleichmässige Belegung mit Polymerteilchen auf der Aktivkohle gewährleistet war. Während des Besprühens der Aktivkohle mit der Dispersion trat laufend Wasserdampf aus den Aktivkohleteilchen aus. Die Verfahrensschritte (1) Beladen der Aktivkohle mit Wasser, (2) Erhitzen auf 105°C und (3) Behandeln mit Dispersion 4 und Wasser wurden insgesamt dreimal wiederholt. Danach betrug das Verhältnis von Copolymerisat: Aktivkohle auf den beschichteten Aktivkohlen 6:94. Um das Copolymerisat zu vernetzen und die Oberfläche der körnigen Aktivkohle zu verfestigen, wurde das so beschichtete Material auf eine Temperatur von 130°C erhitzt. Die Vernetzungsreaktion war nach 3 Minuten beendet.

*Beispiel 5:*

500 Gew.-Teile einer Aktivkohle mit einem mittleren Teilchendurchmesser von 4 mm und einer inneren Oberfläche von 1100 m²/g wurden bei Raumtemperatur mit 150 Teilen Wasser besprüht, wobei man die Aktivkohle während des Besprühens wendete. Der Wassergehalt der Aktivkohle betrug 30% des Sättigungswertes an Wasser. Die besprühte Aktivkohle wurde dann auf eine Temperatur von 130°C erhitzt, wobei Wasserdampf aus der Aktivkohle austrat. Solange die Wasserdampfentwicklung anhielt, wurden bei einer Temperatur von 130° 100 Teile der Dispersion 5 und 10 Teilen Wasser aufgesprüht. Die Verfahrensschritte des Behandelns der Aktivkohle mit Wasser, Erhitzen auf 130°C und Behandeln mit Dispersion 5 und Wasser wurden insgesamt dreimal wiederholt. Danach erhitzte man das so beschichtete körnige Material noch 4 Minuten auf eine Temperatur von 130°C. Das Copolymerisat vernetzte unter diesen Bedingungen, so dass man eine körnige Aktivkohle erhielt, deren Oberflächen verfestigt waren. Das Gewichtsverhältnis Copolymerisat : Aktivkohle in dem beschichteten Material betrug 5:95.

*Beispiel 6:*

Beispiel 4 wurde wiederholt, jedoch verwendete man anstelle der dort beschriebenen Dispersion 100 Teile der Dispersion 6. Man erhielt eine beschichtete körnige Aktivkohle, deren Oberfläche verfestigt war und bei der das Verhältnis von Copolymerisat : Aktivkohle 4:96 betrug.

*Prüfung der körnigen beschichteten Aktivkohle*

Der Abriebverlust wurde bestimmt, indem man jeweils 100 g des zu prüfenden Materials in einen 1-l-Zylinder einfüllte und diesen 200 Stunden auf einem Rollstuhl laufen liess. Die nichtbehandelte körnige Aktivkohle war nach dieser Zeit praktisch vollständig in ein Pulver übergegangen, während mit Hilfe einer Siebanalyse festgestellt werden konnte, dass bei den nach Beispielen 1 bis 6 erfindungsgemäss beschichteten körnigen Aktivkohlen die Abriebverluste unter 2% lagen.

In einer weiteren Testreihe wurde die Beladbarkeit der unbehandelten und der gemäss den Beispielen 1 bis 6 beschichteten Aktivkohle geprüft, indem man die zu untersuchenden Proben in eine Adsorptionsvorrichtung einfüllte und ein Toluol-Luftgemisch hindurchleitete, das 1000 ppm Toluol enthielt. Die Beladbarkeiten sind in der folgenden Tabelle angegeben.

*Tabelle*

| Körnige Aktivkohle gemäss Beispiel Nr. | Beladbarkeit [%] | | Abriebverlust [%] | |
|---|---|---|---|---|
| | der unbehandelten Aktivkohle | der erfindungsgemäss beschichteten Aktivkohle | der unbehandelten Aktivkohle | der erfindungsgemäss beschichteten Aktivkohle |
| 1 | 44 | 40 | ca. 100 | 2 |
| 2 | 40 | 39 | ca. 100 | 2 |
| 3 | 46 | 45 | ca. 100 | 2 |
| 4 | 44 | 40 | ca. 100 | 2 |
| 5 | 38 | 38 | ca. 100 | 2 |
| 6 | 44 | 46 | ca. 100 | 2 |

Zusätzlich wurde noch die Desorptionsgeschwindigkeit geprüft. Hierbei ergab sich, dass die sechs erfindungsgemäss beschichteten Proben in ihrem Desorptionsverhalten den unbehandelten Aktivkohlegranulaten entsprachen.

Durch die Verfestigung der Oberfläche von Aktivkohlen gemäss vorliegender Erfindung ist es möglich, körnige Aktivkohlen in Bewegtbett-Verfahren einzusetzen und dabei die gegenüber den üblichen Festbettverfahren möglichen Vorteile zu erzielen.

**Patentansprüche**

1. Verfahren zum Verfestigen der Oberflächen von körnigen Adsorbentien, dadurch gekennzeichnet, dass man die Adsorbentien, die zunächst praktisch kein Wasser enthalten,
1) mit 25 bis 70 Gew.-% der maximal möglichen Menge an Wasser behandelt, das sie bis zur Sättigung aufnehmen können,
2) die Adsorbentien auf eine Temperatur erhitzt, bei der das aufgenommene Wasser verdampft,
3) und sie, solange aufgenommenes Wasser verdampft, unter Mischen mit wässerigen Dispersionen von selbstvernetzenden N-Methylol- und/oder N-Methylolethergruppen aufweisen den Copolymerisaten behandelt, so dass das Gewichtsverhältnis von Copolymerisat, das auf den Adsorbentien haftet, zu Adsorbentien 2:98 bis 30:70 beträgt und
4) die so beschichteten Adsorbentien auf Temperaturen von 110 bis 180°C erhitzt, um die Copolymerisate zu vernetzen.

2. Verfahren nach Anspruch 1, dadurch gekennzeichnet, dass wärmesensibilisierte Dispersionen eingesetzt werden.

**Claims**

1. A process for consolidating the surface of a granular adsorbent, wherein the adsorbent, which initially contains virtually no water,
1) is treated with 25 to 70% by weight of the maximum possible amount of water which it can take up to saturation,
2) is heated to a temperature at which the water taken up evaporates,
3) and is treated, while water taken up is evaporating, with an aqueous dispersion of a self-crosslinking copolymer containing N-methylol and/or N-methylol-ether groups, while mixing, so that the ratio of the weight of copolymer adhering to the adsorbent to the weight of adsorbent is from 2:98 to 30:70, and
4) the adsorbent thus coated is heated to from 110 to 180°C in order to crosslink the copolymer.

2. A process as claimed in Claim 1, wherein a heat-sensitized dispersion is employed.

## Revendications

1. Procédé pour solidifier la surface d'adsorbants granuleux, caractérisé par le fait que

1) on traite les adsorbants, qui ne contiennent, d'abord, pratiquement pas d'eau, avec 25 à 70% en poids de la quantité maximale possible d'eau qu'ils peuvent accepter pour la saturation,

2) on chauffe les adsorbants à une température à laquelle l'eau reçue se vaporise,

3) et, tant que l'eau reçue se vaporise, on les traite en les mélangeant avec des dispersions aqueuses de copolymérisats autoréticulants, contenant des groupes N-méthylol et/ou N-méthyloléther, de manière que le rapport en poids entre le copolymérisat, qui adhère aux adsorbants, et les adsorbants soit de 2/98 à 30/70,

4) on chauffe les adsorbants ainsi enduits à des températures de 110 à 180°C, pour réticuler le copolymérisat.

2. Procédé selon la revendication 1, caractérisé par le fait que l'on utilise des dispersions sensibilisées thermiquement.